# EUROPÄISCHE PATENTSCHRIFT

(11) **EP 0 660 021 B1**
(45) Veröffentlichungstag und Bekanntmachung des Hinweises auf die Patenterteilung: **22.10.1997**
(21) Anmeldenummer: 93120918.3
(22) Anmeldetag: 27.12.1993
(51) Int. Cl.: F16L 13/14, B21D 39/04

(54) **Verfahren zum Fügen eines biegeschlaffen, schlauchförmigen Fügeteils an ein Ende eines Basisteils sowie Vorrichtung zum Durchführen des Verfahrens**
Process for joining a flexible, tubular coupling element to the end of the other one and device for its process
Procédé pour emboîter un élément de tuyau flexible à un second élément de connexion et dispositif pour son procédé

(43) Veröffentlichungstag der Anmeldung: 28.06.1995
(73) Patentinhaber: EMPORIA MASCHINEN AG, 6340 Baar (CH)
(72) Erfinder: Schneider, Wolf-Dietrich, D-71088 Holzgerlingen (DE)
(74) Vertreter: EGLI-EUROPEAN PATENT ATTORNEYS

(56) Entgegenhaltungen:
- FR-A- 1 562 207
- GB-A- 524 009
- US-A- 2 381 748
- US-A- 3 977 710

## Beschreibung

Die Erfindung betrifft ein Verfahren zum Fügen eines biegeschlaffen, schlauchförmigen Fügeteils an ein Ende eines Basisteils gemäss dem Oberbegriff des Patentanspruchs 1. Die Erfindung betrifft weiterhin eine Vorrichtung zum Durchführen eines solchen Verfahrens.

Das Fügen sogenannter biegeschlaffer, schlauchförmiger Teile, wie zum Beispiel Schläuche oder Dichtungen, stellt ein grosses Automatisierungshemmnis im Bereich der Montage dar. Solche längliche und hohle, eventuell (teilweise) gebogene oder konische Teile werden überwiegend manuell montiert.

Bei der Herstellung von Infusionsausrüstungen wird ein zylindrisches oder auch konisches Zwischenstück aus Latexgummi (Rubber) manuell über ein Ende eines Infusionsrohres oder Infusionsschlauches bzw. ein Adapterzwischenstück geschoben. Dieser Fügevorgang des Zwischenstücks an den etwas grösseren Fügepartner dauert je nach Geschicklichkeit des Arbeiters zwischen 10 und 25 Sekunden. Durch Schmierung der Fügepartner, zum Beispiel mit einem Wasser/Alkohol-Gemisch, lässt sich die benötigte Montagezeit reduzieren, wobei aber immer noch mehr als 4 Sekunden gebraucht werden.

Der Erfindung liegt die Aufgabe zugrunde, ein Verfahren zu schaffen, das einen automatischen, schnellen und sicheren Fügevorgang bei den obengenannten Teilen ermöglicht.

Die genannte Aufgabe wird erfindungsgemäss durch den kennzeichnenden Teil des Patentanspruchs 1 gelöst. Durch die Druckluft wird das Fügeteil schlagartig aufgeweitet, so dass das Ende des Basisteils eingeschoben werden kann. So ist ein druckluftunterstützter, automatisierter Fügevorgang realisiert, der beispielsweise auch geeignet ist für Basisteile, deren konisches Ende zum Teil einen grösseren Aussendurchmesser hat als der Innendurchmesser des biegeschlaffen, schlauchförmigen Fügeteils. Die Montagezeit ist reduziert auf weniger als 2 Sekunden. Die Schmierung der Fügepartner ist nicht mehr nötig.

Eine Vorrichtung zum Durchführen des erfindungsgemässen Verfahrens weist die kennzeichnende Merkmale des Patentanspruchs 3 auf. Die koaxiale Druckluftzuführung ermöglicht in einfacher Weise das Aufweiten des dem Basisteil zugewandten Ende des Fügeteils.

Vorteilhafte Weiterbildungen der Erfindung ergeben sich aus den Unteransprüchen.

Gemäss einer bevorzugten Ausführungsform der Erfindung, wobei das Basisteil eine zentrische Bohrung aufweist, geschieht das Zuführen der Druckluft in die Werkstückaufnahme durch die zentrische Bohrung des Basisteils zwecks Erzeugung einer auf das vom Basisteil abgewandte Ende des Fügeteils wirkenden, gegen das Basisteil gerichteten Druckkraft, welche das Fügeteil zusätzlich gegen das Basisteil schnellt und auf dasselbe aufschiebt. Der aufgeweitete Teil des Fügeteils stützt sich dabei am Rand der Werkstückaufnahme ab, so dass das Fügeteil beim Einschieben des Basisteils nicht wieder zurückgedrückt wird. In dieser Weise ist durch die Kombination des Aufweitens und des Drückens ein noch schnellerer und sichererer Fügevorgang verwirklicht.

Gemäss einer Ausführungsform der Erfindung weist das Greifwerkzeug eine Führungshülse auf, welche das konische Ende des Basisteils mit Abstand umgibt. Diese verhindert das Verkrallen und das daraus resultierende ballonartige Aufblasen des biegeschlaffen Fügeteils beim Fügen. So ist ein sicherer Fügevorgang gewährleistet.

Ein Ausführungsbeispiel der Erfindung ist nachstehend anhand der Zeichnungen näher erläutert. Es zeigen
- Fig. 1: einen Schnitt durch eine erste Ausführungsform der erfindungsgemässen Vorrichtung,
- Fig. 2: einen Schnitt durch eine weitere Ausführungsform der erfindungsgemässen Vorrichtung in der Ansetzphase,
- Fig. 3: einen Schnitt entsprechend Fig. 2, jedoch in der Aufsetzphase und
- Fig. 4: einen Schnitt durch eine weitere Ausführungsform der erfindungsgemässen Vorrichtung.

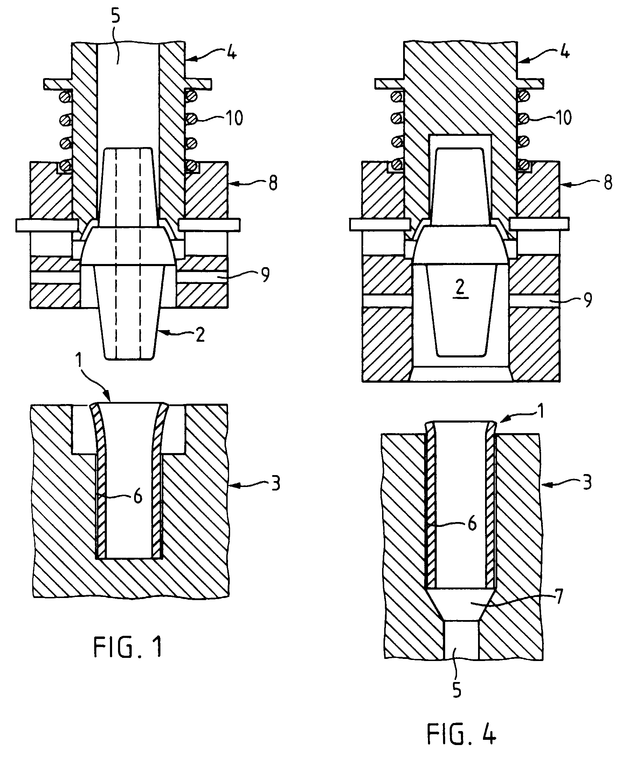

Die Figur 1 zeigt eine erste Ausführungsform einer erfindungsgemässen Vorrichtung zum Fügen eines biegeschlaffen, schlauchförmigen Fügeteils 1 an ein Basisteil 2. Das Fügeteil 1 besteht zum Beispiel aus Latexgummi (Rubber). Das Basisteil 2 weist eine zentrische Bohrung auf und ist an dem zu fügenden Ende zum Beispiel zylindrisch oder konisch geformt, wobei der Aussendurchmesser des konischen Teils mindestens teilweise grösser ist als der Innendurchmesser des unverformten Fügeteils 1.

Eine Werkstückaufnahme 3 zur Aufnahme des Fügeteils 1 weist eine Sacklochbohrung 6 mit einem zylindrischen ersten Bereich und einem dem Basisteil 2 zugewandten zweiten Bereich, der weiter ist als der erste Bereich, auf. Der Durchmesser des unteren Bereichs entspricht im wesentlichen der Aussenabmessung des Fügeteils 1.

Ein Greifwerkzeug 4 zur Aufnahme des Basisteils 2, so dass das Fügeteil 1 und das Basisteil 2 koaxial ausgerichtet sind, ist in Richtung der Sacklochbohrung 6 bewegbar. Weiterhin ist eine Druckluftzuführung 5 vorgesehen, über die in an sich bekannter Weise Druckluft zugeführt werden kann. Die Druckluftzuführung 5 ist zum Beispiel, wie in der Figur 1 gezeigt, zentral und axial im Greifwerkzeug 4 angeordnet. So kann die Druckluft durch die zentrische Bohrung des Basisteils 2 in die Sacklochbohrung 6 der Werkstückaufnahme 3 geführt werden.

Das Greifwerkzeug 4 weist eine Führungshülse 8 auf, welche das konische Ende des Basisteils 2 mindestens teilweise mit Abstand umgibt. Diese dient einerseits zur Führung der Druckluft in die Sacklochbohrung 6 und andererseits (hauptsächlich) zum Verhindern des Verkrallens und des ballonartigen Aufblasens des Fügeteils 1 beim Fügevorgang.

Die Führungshülse 8 ist mit radialen Entlüftungsbohrungen 9 versehen, so dass die Druckluft entweichen kann. Sie ist federnd am Greifwerkzeug 4 befestigt, zum Beispiel mittels einer Feder 10.

Der erfindungsgemässe Fügevorgang läuft wie folgt ab: Das Fügeteil 1 wird mit einem Spiel von circa 0,1 mm in dem unteren Bereich der Sacklochbohrung 6 der Werkstückaufnahme 3 aufgenommen, und das Basisteil 2 wird im Greifwerkzeug 4 geklemmt. Wie gezeigt, kann die Sacklochbohrung 6 vertikal ausgerichtet sein, so dass beim Aufnehmen und Halten des Fügeteils 1 die Schwerkraft ausgenützt wird, jedoch ist auch eine andere Ausrichtung möglich.

Erst senkt sich das Greifwerkzeug 4, das koaxial mit dem Fügeteil 1 ausgerichtet ist, von oben bis auf einen Abstand von circa 8 mm an den oberen Rand der Werkstückaufnahme 3 bzw. des Fügeteils 1. Zu diesem Zeitpunkt wird die Druckluft zugeführt. Diese strömt durch die zentrale, axiale Druckluftzuführung 5 und die zentrische Bohrung des Basisteils 2 in das sich in die Sacklochbohrung 6 befindende schlauchförmige Fügeteil 1. In der Folge wird das dem Basisteil 2 zugewandte Ende des Fügeteils 1 durch die Druckluft schlagartig aufgeweitet und das Basisteil 2 durch weiteres Absenken des Greifwerkzeugs 4 gleichzeitig eingeschoben.

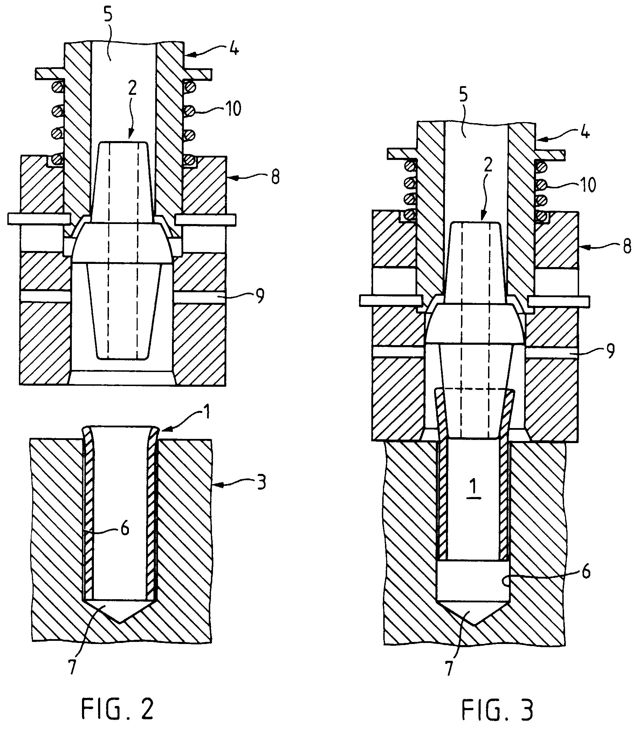

In der Figur 2 ist eine weitere Vorrichtung zum Fügen eines biegeschlaffen, schlauchförmigen Fügeteils 1 an ein Basisteil 2 gemäss der Erfindung wiedergegeben. Das Basisteil 2 weist eine zentrische Bohrung auf und ist an dem zu fügenden Ende konisch geformt, wobei der Aussendurchmesser des konischen Teils mindestens teilweise grösser ist als der Innendurchmesser des unverformten Fügeteils 1.

Die Werkstückaufnahme 3 zur Aufnahme des Fügeteils 1 ist mit einer zylindrischen Sacklochbohrung 6 versehen, deren Durchmesser und Tiefe im wesentlichen der Aussenabmessung des Fügeteils 1 entsprechen und die am geschlossenen Ende zusätzlich eine Aussparung 7 aufweist. Die Sacklochbohrung 6 hält das Fügeteil 1 so, dass es mit einem Spiel von zum Beispiel circa 0,1 mm aussen geführt und nahezu vollständig in der Sacklochbohrung 6 aufgenommen wird.

Die zusätzliche Aussparung 7 am geschlossenen Ende der Sacklochbohrung 6 erstreckt sich nahezu über die ganze Endfläche der zylindrischen Bohrung 6 und ist zum Beispiel konisch ausgeführt. Sie dient dazu, bei dem Einleiten von Druckluft in die Sacklochbohrung 6 dieselbe auf das sich am geschlossenen Ende der Sacklochbohrung 6 befindende, vom Basisteil 2 abgewandte Ende des Fügeteils 1 und damit in Richtung des offenen Endes der Sacklochbohrung 6 auf dasselbe wirken zu lassen.

In einer weiteren, nicht gezeigten Ausführungsform der erfindungsgemässen Vorrichtung ist die Druckluftzuführung 5 seitlich am Greifwerkzeug 4 angeordnet, wobei die Druckluft entlang der Aussenseite des konischen Endes des Basisteils 2 in die Sacklochbohrung 6 der Werkstückaufnahme 3 geführt wird. Somit ist diese Vorrichtung auch geeignet zum Fügen eines Fügeteils 1 an ein Basisteil 2, das keine zentrische Bohrung aufweist.

Die in der Figur 2 gezeigte Ausführungsform hat viele Vorteile: Da die Druckluft durch das offene Ende (von oben) in die Sacklochbohrung 6 geleitet wird, baut sich der Überdruck hauptsächlich dort schlagartig auf, wo er gebraucht wird, nämlich am geschlossenen, unteren Ende der Sacklochbohrung 6. Hier übt die Druckluft die benötigte axiale Kraft auf das untere Ende des Fügeteils 1 aus. Ausserdem wird beim daraus erfolgenden Austreten des oberen Endes des Fügeteils 1 aus der Sacklochbohrung 6 der über die Werkstückaufnahme 3 hinausragende Teil des Fügeteils 1 verstärkt aufgeweitet. Dies erleichtert das Aufschieben des Fügeteils 1 auf das Basisteil 2.

In der Ansetzphase (Figur 2) senkt sich das Greifwerkzeug 4, das koaxial mit dem Fügeteil 1 ausgerichtet ist, von oben bis auf einen Abstand von circa 8 mm an den oberen Rand der Werkstückaufnahme 3 bzw. des Fügeteils 1. Zu diesem Zeitpunkt wird die Druckluft zugeführt. Diese strömt durch die zentrale, axiale Druckluftzuführung 5, die zentrische Bohrung des Basisteils 2 und das schlauchförmige Fügeteil 1 in die Sacklochbohrung 6. In der Folge wird nicht nur der obere Teil des Fügeteils 1 aufgeweitet, sondern entsteht auch am geschlossenen Ende der Sacklochbohrung 6 ein Überdruck.

Die Druckluft wirkt über die konische Aussparung 7 auf die untere Stirnfläche des Fügeteils 1 am geschlossenen Ende der Sacklochbohrung 6, so dass es nach oben geschnellt wird. Der dadurch über die Werkstückaufnahme 3 hinausragende Teil des Fügeteils 1 wird dann durch die Druckluft verstärkt aufgeweitet.

In der Aufsetzphase (Figur 3) bewegt sich das Greifwerkzeug 4 mit der Führungshülse 8 weiter nach unten, bis diese auf der Werkstückaufnahme 3 aufsitzt bzw. auf sie einfedert. Sodann wird das konische Ende des Basisteils 2 in den aufgeweiteten Teil des Fügeteils 1 geschoben. Durch die konische Form des Basisteils 2 nimmt hierbei die Reibungskraft zu. Bei hohen Fügegeschwindigkeiten kann das Fügeteil 1 dazu neigen, sich stirnseitig auf dem Basisteil 2 zu verkrallen, wobei es sich im verkrallten Zustand ballonartig aufbläst. Dies wird jedoch verhindert durch die Führungshülse 8, die das Ausströmen der Druckluft seitlich nach oben zwischen das Fügeteil 1 und das Basisteil 2 und weiter durch die radialen Entlüftungsbohrungen 9 erzwingt. Somit wird das Verkrallen des Fügeteils 1 verhindert oder eine eingetretene Verkrallung aufgehoben, so dass der Fügevorgang sicher und vollständig volzogen wird.

Die federnde Befestigung sorgt dabei für ein dichtes Aufsitzen der Führungshülse 8 auf der Werkstückaufnahme 3 und unterstützt somit das Ausströmen der Druckluft seitlich nach oben.

Nach der Aufsetzphase werden die gefügten Teile 1 und 2 mit Hilfe eines nicht gezeigten Ausstossers aus dem Greifwerkzeug 4 gedrückt, um anschliessend weiter montiert zu werden. Die Vorrichtung ist dann bereit für den nächsten Fügevorgang.

In einer weiteren Ausführungsform (Figur 4) der erfindungsgemässen Vorrichtung mündet die Druckluftzuführung 5 direkt in die Aussparung 7 der Werkstückaufnahme 3. Auch diese Ausführungsform ist daher zum Fügen eines Fügeteils 1 an ein konisch geformtes Basisteil 2, das keine zentrische Bohrung aufweist, geeignet.

## Patentansprüche

1. Verfahren zum Fügen eines biegeschlaffen, schlauchförmigen Fügeteils (1) an ein Ende eines Basisteils (2), **dadurch gekennzeichnet, dass** die folgenden Schritte ausgeführt werden:
- Einführen des Fügeteils (1) in eine Werkstückaufnahme (3),
- Aufnehmen des Basisteils (2) durch ein Greifwerkzeug (4), so dass das Fügeteil (1) und das Basisteil (2) koaxial ausgerichtet sind,
- Annähern des Greifwerkzeugs (4) und der Werkstückaufnahme (3),
- Zuführen von Druckluft in die Werkstückaufnahme (3) durch eine Druckluftzuführung (5) zwecks Aufweitung des dem Basisteil (2) zugewandten Endes des Fügeteils (1),
- Einschieben des Basisteils (2) in das aufgeweitete Ende des Fügeteils (1).

2. Verfahren nach Anspruch 1, wobei das Basisteil (2) eine zentrische Bohrung aufweist, **dadurch gekennzeichnet, dass** das Zuführen der Druckluft in die Werkstückaufnahme (3) durch die zentrische Bohrung des Basisteils (2) geschieht zwecks Erzeugung einer auf das vom Basisteil (2) abgewandte Ende des Fügeteils (1) wirkenden, gegen das Basisteil (2) gerichteten Druckkraft, welche das Fügeteil (1) gegen das Basisteil (2) schnellt und auf dasselbe aufschiebt.

3. Vorrichtung zum Durchführen eines Verfahrens nach Anspruch 1 oder 2, **dadurch gekennzeichnet, dass** diese eine Werkstückaufnahme (3) zur Aufnahme des Fügeteils (1), ein bewegbares Greifwerkzeug (4) zur Aufnahme des Basisteils (2), und eine mit dem Fügeteil (1) und dem Basisteil (2) koaxiale Druckluftzuführung (5) umfasst.

4. Vorrichtung nach Anspruch 3, **dadurch gekennzeichnet, dass** die Werkstückaufnahme (3) eine Sacklochbohrung (6) mit einem zylindrischen ersten Bereich und einem dem Greifwerkzeug (4) zugewandten zweiten Bereich, der weiter ist als der erste Bereich, aufweist.

5. Vorrichtung nach Anspruch 3, **dadurch gekennzeichnet, dass** die Werkstückaufnahme (3) mit einer zylindrischen Sacklochbohrung (6), die am geschlossenen Ende zusätzlich eine Aussparung (7) aufweist, versehen ist, und die Druckluftzuführung (5) im Greifwerkzeug (4) angeordnet ist.

6. Vorrichtung nach Anspruch 3, **dadurch gekennzeichnet, dass** die Werkstückaufnahme (3) rohrförmig ist und an einem Ende zusätzlich eine Aussparung (7) aufweist, und die Druckluftzuführung (5) an der Werkstückaufnahme (3) angeordnet ist und in die Aussparung (7) mündet.

7. Vorrichtung nach einem der Ansprüche 3 bis 6, **dadurch gekennzeichnet, dass** das Greifwerkzeug (4) eine Führungshülse (8) aufweist, welche das Ende des Basisteils (2) mindestens teilweise mit Abstand umgibt.

8. Vorrichtung nach Anspruch 7, **dadurch gekennzeichnet, dass** die Führungshülse (8) Entlüftungsbohrungen (9) aufweist.

9. Vorrichtung nach einem der Ansprüche 7 und 8, **dadurch gekennzeichnet, dass** die Führungshülse (8) federnd am Greifwerkzeug (4) befestigt ist.

10. Vorrichtung nach einem der Ansprüche 5 und 6, **dadurch gekennzeichnet, dass** die Aussparung (7) konisch geformt ist.

## Claims

1. Method for joining a pliable, tubular joining component (1) to one end of a base component (2), characterized in that the following steps are performed:
- inserting the joining component (1) into a workpiece holder (3),
- holding the base component (2) by means of a gripping tool (4) so that the joining component (1) and the base component (2) are aligned coaxially,
- reducing the distance between the gripping tool (4) and the workpiece holder (3),
- delivering compressed air into the workpiece holder (3) via a compressed air delivery means (5) for the purpose of widening that end of the joining component (1) facing the base component (2),
- pushing the base component (2) into the widened end of the joining component (1).

2. Method according to Claim 1, in which the base component (2) has a central recess, characterized in that the delivery of the compressed air into the workpiece holder (3) via the central recess of the base component (2) is effected for the purpose of generating a compressive force which acts on that end of the joining component (1) remote from the base component (2), is directed towards the base component (2) and shoots the joining component (1) towards the base component (2) and pushes it onto the latter.

3. Device for carrying out a method according to Claim 1 or 2, characterized in that this device comprises a workpiece holder (3) for holding the joining component (1), a movable gripping tool (4) for holding the base component (2), and a compressed air delivery means (5) coaxial with respect to the joining component (1) and the base component (2).

4. Device according to Claim 3, characterized in that the workpiece holder (3) has a blind bore (6) with a cylindrical first area and a second area which faces the gripping tool (4) and which is wider than the first area.

5. Device according to Claim 3, characterized in that the workpiece holder (3) is provided with a cylindrical blind bore (6) which additionally has a recess (7) at the closed end, and the compressed air delivery means (5) is arranged in the gripping tool (4).

6. Device according to Claim 3, characterized in that the workpiece holder (3) is tubular and additionally has a recess (7) at one end, and the compressed air delivery means (5) is arranged on the workpiece holder (3) and opens into the recess (7).

7. Device according to one of Claims 3 to 6, characterized in that the gripping tool (4) has a guide sleeve (8) which surrounds the end of the base component (2) at least partly with clearance.

8. Device according to Claim 7, characterized in that the guide sleeve (8) has vent bores (9).

9. Device according to one of Claims 7 and 8, characterized in that the guide sleeve (8) is fastened resiliently on the gripping tool (4).

10. Device according to one of Claims 5 and 6, characterized in that the recess (7) is shaped conically.

## Revendications

1. Procédé pour joindre un raccord souple (1) en forme de tuyau flexible à une extrémité d'une partie de base (2), caractérisé en ce qu'on passe par les étapes ci-après:
- introduire le raccord (1) dans un logement de pièce à usiner (3),
- saisir l'élément de base (2) via un outil de préhension (4), de telle sorte que le raccord (1) et la partie de base (2) sont alignés en direction coaxiale,
- rapprocher l'outil de préhension (4) et le logement de pièce à usiner (3),
- amener de l'air comprimé dans le logement de pièce à usiner (3) via une alimentation d'air comprimé (5) dans le but d'élargir l'extrémité du raccord (1) orientée vers la partie de base (2),
- insérer l'élément de base (2) dans l'extrémité élargie du raccord (1).

2. Procédé selon la revendication 1, dans lequel l'élément de base (2) présente un alésage central, caractérisé en ce que l'alimentation de l'air comprimé dans le logement de pièce à usiner (3) a lieu à travers l'alésage central de la partie de base (2) afin d'obtenir une force de pression orientée vers la partie de base (2) et s'exerçant sur l'extrémité du raccord (1) se détournant de la partie de base (2), pression qui accélère le raccord (1) contre la partie de base (2) et le pousse sur cette dernière.

3. Dispositif pour la mise en oeuvre d'un procédé selon la revendication 1 ou 2, caractérisé en ce que ledit logement de pièce à usiner (3) dans lequel vient se loger le raccord (1) comprend un outil de préhension mobile (4) sur lequel vient se disposer l'élément de base (2) et une alimentation d'air sous pression (5) coaxiale au raccord (1) et la partie de base (2).

4. Dispositif selon la revendication 3, caractérisé en ce que le logement de pièce à usiner (3) présente un alésage borgne (6) comprenant une première zone cylindrique et une seconde zone orientée vers l'outil de préhension (4), qui est plus large que la première zone.

5. Dispositif selon la revendication 3, caractérisé en ce que le logement de pièce à usiner (3) est muni d'un alésage cylindrique (6) en forme de trou borgne qui présente, en outre, un évidement (7) à son extrémité fermée, l'alimentation d'air sous pression (5) étant disposée dans l'outil de préhension (4).

6. Dispositif selon la revendication 3, caractérisé en ce que le logement de pièce à usiner (3) est de forme tubulaire et présente à une extrémité, en outre, un évidement (7), l'alimentation d'air sous pression (5) étant disposée contre le logement de pièce à usiner (3) et débouchant dans l'évidement (7).

7. Dispositif selon l'une quelconque des revendications 3 à 6, caractérisé en ce que l'outil de préhension (4) présente un manchon de guidage (8) qui entoure l'extrémité de la partie de base (2) au moins partiellement à distance.

8. Dispositif selon la revendication 7, caractérisé en ce que le manchon de guidage (8) présente des alésages d'aération (9).

9. Dispositif selon l'une quelconque des revendications 7 et 8, caractérisé en ce que le manchon de guidage (8) est fixé de manière élastique à l'outil de préhension (4).

10. Dispositif selon l'une quelconque des revendications 5 et 6, caractérisé en ce que l'évidement (7) est de forme conique.
